# EUROPEAN PATENT SPECIFICATION

(11) **EP 0 567 343 B1**
(45) Date of publication and mention of the grant of the patent: **20.06.2001**
(21) Application number: 93303188.2
(22) Date of filing: 23.04.1993
(51) Int. Cl.: H04N 17/04, H04N 5/52, H04N 5/44

(54) **Automatic adjustment circuit for analog control unit**
Automatische Regelungsschaltung für einen analogen Regelkreis
Circuit de réglage automatique pour une unité de contrôle analogique

(30) Priority: 24.04.1992 JP 10672592
(43) Date of publication of application: 27.10.1993
(73) Proprietor: ORION ELECTRIC CO., Ltd., Takefu-City, Fukui 915 (JP)
(72) Inventor: Oue, Noboru, Takefu-City, Fukui 915 (JP); Nagata, Yoshitsugu, Takefu-City, Fukui 915 (JP); Otobe, Hiroshi, Takefu-City, Fukui 915 (JP)
(74) Representative: Nettleton, John Victor

(56) References cited:
- EP-A- 0 298 625
- US-A- 4 415 921
- US-A- 4 700 218
- US-A- 4 707 739
- US-A- 4 769 703

## Description

### BACKGROUND OF THE INVENTION

### Field of the Invention

This invention relates to an automatic adjustment circuit for an analog control unit which electronically performs automatic control of gain errors which occur in an analog control unit such as a video intermediate frequency amplification circuit (VIF circuit) or a sound intermediate frequency amplification circuit (SIF circuit) provided in an electronic apparatus such as a television receiver (TV).

### Prior Art:

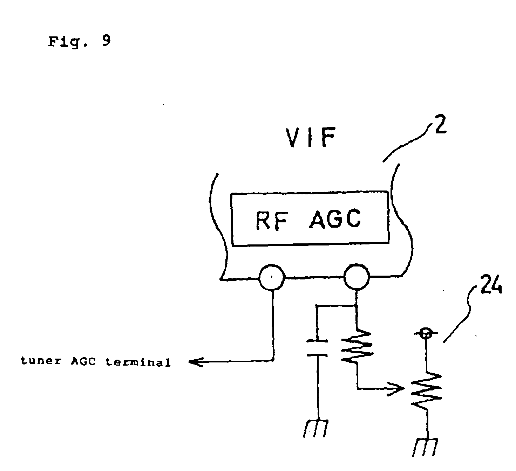

In a VIF circuit of a TV set for example, an automatic gain control circuit (AGC circuit) is provided which supplies negative feedback of voltage to a TV tuner so that a detection output remains constant even where an input level received by a TV antenna varies. However, TV tuners and VIF circuits have their own gain errors and errors also occur in the AGC voltage. Conventionally, these gain errors were adjusted by changing an adjustment point of the AGC circuit by a semifixed resistor 24 provided in the VIF circuit 2 as shown in Fig. 9. Ordinarily, this adjustment was performed by adjusting semifixed resistor 24 on the TV production line either manually by a worker or mechanically using a factory automation apparatus.

However, this adjustment is one of very intricate processes to be performed on the production line, and besides the preciseness of adjustment is not fully reliable, so that said adjustment is not preferable for mass production of good products.

Said adjustment is required not only for TV VIF circuits but also for other blocks of TV such as SIF circuits, stereo circuits, character broadcast receiving circuits as well as for various types of analog control units used for other household and office appliances. Accordingly there is a great demand for a adjustment circuit which can automatically adjust errors of the analog control units in more simple and efficient manner.

US-A-4 707 739 discloses an automatic calibration circuit for a monitoring device in which a static image is displayed on CRT and the image projected and recorded on film. A uniform pattern is displayed on the CRT by setting a contrast control signal to a minimum value and a brightness control signal to a reference level. Then, the light outputted from the face of the CRT is measured at any arbitrary point on the face of the CRT. The value so measured is used to correct the brightness signal and contrast signal so as to maintain initially set brightness and contrast values for images displayed on the CRT.

In one example, a CPU is used to automatically carry out the correction process using an automatic calibration circuit. The CPU includes a ROM wherein an automatic brightness/contrast calibrating program has been stored, a RAM for temporarily storing data stored in the ROM according to the program and a measured peak value signal supplied by a peak detecting circuit, a processor for processing the data in the RAM according to the program stored in the ROM and calibrating the brightness and contrast values, and an I/O circuit for inputting and outputting signals to and from the CPU, the CPU being used to correct the brightness control signal and the contrast control signal based on the peak value signal from the peak detecting circuit. The brightness control signal and the contrast control signal thus corrected by the CPU are applied to an image amplifier circuit so that the brightness and contrast of a CRT are controlled.

US-A-4 769 703 discloses apparatus to permit service adjustment of a television receiver including a microprocessor which normally controls parameters of a video signal processed by the receiver. The microprocessor also automatically establishes a desired video signal reference condition for the service mode when manual service controls are to be adjusted. The service mode is entered by pressing a designated microprocessor keyboard key while plugging the receiver into a source of primary AC power.

A broadcast television signal received by an antenna is coupled to a television signal processor. Separated luminance and chrominance components of the television signal are conveyed to a luminance and chrominance signal processor including gain controllable amplifiers for determining the colour saturation and contrast of a displayed image, DC level setting networks for determining the brightness of a displayed image, and high frequency peaking circuits for enhancing the fine image detail of a displayed image.

A processor provides output low level colour image representative signals to respective red, green and blue display driver amplifiers which provide DC coupled output high level video signals. Coupled to display driver amplifiers are a bias adjustment network and a gain adjustment network which each include plural adjustable devices, e.g., potentiometers, respectively associated with individual ones of the display drivers. The control devices associated with the networks are accessible from the rear of the receiver, and are adjusted by a service technician during receiver manufacture and subsequent receiver service.

The receiver also includes a digital-to-analog converter which converts binary signals from the microprocessor to analog form. The microprocessor provides information for controlling various parameters of the video signal processed by the processor. The microprocessor receives viewer generated control signals related to a desired condition of image brightness or contrast, for example, via a keyboard. The control signals from keyboard exhibit binary form which, after processing by the microprocessor, are converted to analog form before being coupled to respective control inputs of the luminance-chrominance processor.

The microprocessor includes a nonvolatile memory, such as an EEPROM (electronically erasable programmable read only memory) which stores reference values associated with certain signal processing functions. Such stored values may be factory preset values. The memory element of microprocessor also stores service reference values.

US-A-4 415 921 discloses a calibration circuit and method for instructing an instrument operator on how to adjust the brightness and contrast controls of a video display in order to achieve a precise display intensity directly proportional to the video drive signal input to the video display. A photometer detects the display intensity as the video drive is modulated and a differential amplifier compares the video drive to the photometer output signal thereby generating an analog offset signal highly representative of brightness and contrast offsets. The analog offset signal is converted to numerical offset values from which independent brightness and contrast offsets are computed. For raster-scanned video displays only a one-bit analog-to-digital converter, a comparator, is required and a multi-bit numerical value of the video offset may be obtained from the comparator output by the method of counting the number of scan lines in each frame giving a positive comparator output.

It is therefore an object of the present invention to provide an automatic adjustment circuit for an analog control unit which requires no manual or mechanical adjustment on a production line for electronic appliances such as television receivers etc., which can perform precision adjustment in a simple manner and which can improve production efficiency.

The present invention provides electronic apparatus including: an analog control unit having a gain adjustment to be pre-set to a standard value, a detection circuit connected to said analog control unit to detect the departure, hereinafter referred to as the "gain error", of the gain adjustment of said analog control unit from the said standard value, and to input a determination signal for the determination of the gain error detected to a control microcomputer included in the apparatus, and a D/A control circuit operated in response to receiving a signal from said control microcomputer to adjust the gain adjustment of the analog control unit to the standard value.

In the embodiments of the invention illustrated in the accompanying drawings, the adjustment of errors in an analog control unit is performed by providing a detection circuit, which detects gain errors in the analog control unit, either outside or inside a TV or other electronic appliance having the analog control unit, inputting determination signals detected by the detection circuit into a control microcomputer equipped in an electronic appliance and operating a D/A control circuit in accordance with a command from the control microcomputer.

Though there is no particular limitation regarding the control microcomputer, it is desirable that, in the case of a television receiver, for example, input/output terminals or equivalent terminals of a control microcomputer which has been employed for channel selection or brightness control etc. The command from the control microcomputer is carried out by reading out a control program written in a memory unit or device.

In the case of a television receiver, analog control units are used as shown in the following table.

In accordance with the present invention,the gain errors of the analog control unit in the electronic apparatus can be performed electronically and automatically, not manually or mechanically, so that higher precision of adjustment and higher production efficiency can be obtained. As a result, mass productivity of good products is increased. Moreover, since the adjustment is performed by a control microcomputer equipped in the apparatus, there is no need to use a complicated FA instrument, so that the simplest and most efficient adjustment can be performed.

| TV Block | Adjustment section | Element |
|---|---|---|
| Video intermediate frequency amplification circuit (VIF) | Detection coil | Coil |
| | Automatic fine tuning | |
| | coil (AFT coil) | Coil |
| | Automatic gain controil VR | Semifixed resistor |
| | (AGC VR) | |
| | Channel trap coil | Coil |
| | Saw matching coil | Coil |
| Sound intermediate frequency amplification circuit (SIF) | Detection coil | Coil |
| | SIF level control VR | Semifixed resistor |
| Stereo circuit | Voltage control oscillator | Semifixed resistor |
| | VR (VOC VR) | |
| | Separation VR | Semifixed resistor |
| | Balance VR | Semifixed resistor |
| Character multiplex system (Teletext) | Voltage control oscillator trimmer condenser (VOC VR) | Semifixed resistor |
| Video circuit (tandem filter) | Gain | Semifixed resistor |
| | Phase | Coil |
| CRT driving circuit | Cut off | Semifixed resistor |
| | Drive | Semifixed resistor |
| Chrominance signal demodulating circuit | Automatio phase control | Voltage control |
| | (APC) | oscillator |
| | SECAM deflecting coil | Coil |
| | SECAM ident coil | Coil |
| | SECAM bell coil | Coil |
| | PAL delay coil | Coil |
| | PAL phase VR | Semifixed resistor |
| Deflection circuit | Vertical size VR | Semifixed resistor |
| | Vertical position VR | Semifixed resistor |
| | Horizontal size coil | Coil |
| | Horizontal position VR or trimmer condenser | Semifixed resistor or Trimmer condenser |
| User-controlled supplementary adjustment circuit | Sub bright VR | Semifixed resistor |
| | Sub contrast VR | Semifixed resistor |
| | Sub color VR | Semifixed resistor |
| | Sub tint VR | Semifixed resistor |
| Power source | +B adjust | Semifixed resistor |
| Clock | Clock adjustment | Trimmer condenser |

### BRIEF DESCRIPTION OF THE DRAWING

Fig. 1 is a block diagram showing one embodiment of an automatic adjustment circuit in accordance with the present invention, which is applied to the VIF circuit of a television receiver.

Fig. 2 is a block diagram showing another embodiment of an automatic adjustment circuit in accordance with the present invention, which is applied to a TV video signal circuit.

Fig. 3 is a CRT display showing a standard video position.

Fig. 4 is a schematic view showing a hard board type of an adjustment mode switching circuit.

Fig. 5 is a schematic view showing a key matrix type of an adjustment mode switching circuit.

Fig. 6 is a schematic view showing a remote control type of an adjustment mode switching circuit.

Fig. 7 is a flow chart of the automatic adjustment type.

Fig. 8 a CRT display showing an adjustment mode.

Fig. 9 is a VIF circuit using a conventional semifixed resistor.

### DETAILED DESCRIPTION OF THE INVENTION

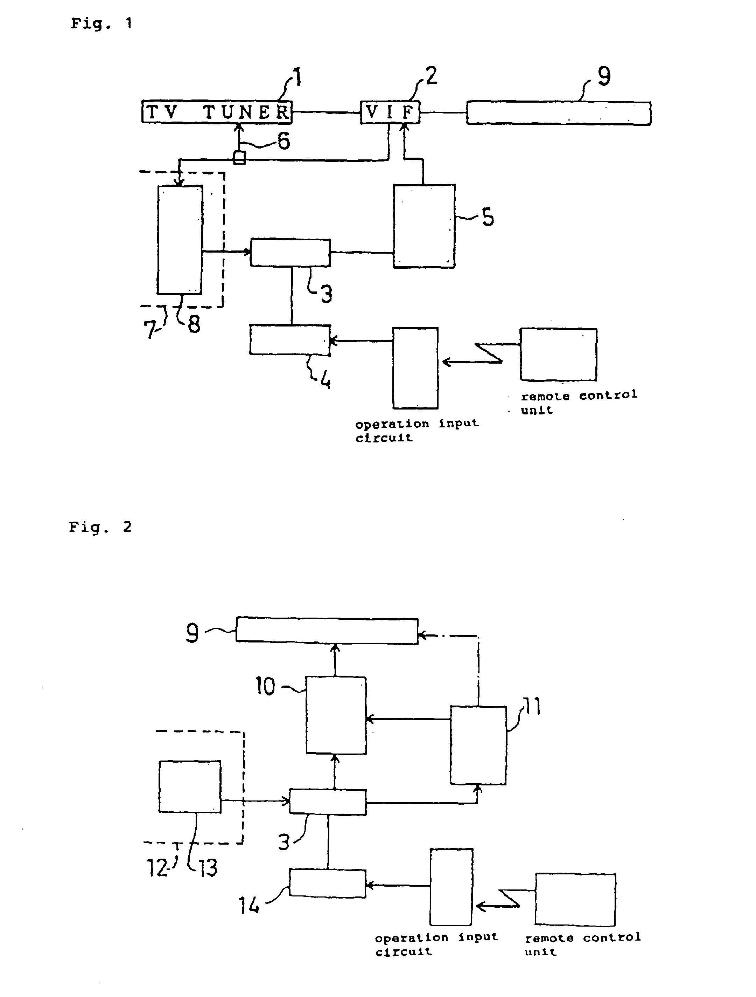

Fig. 1 is a block diagram showing one embodiment of an automatic adjustment circuit which is applied to a television VIF circuit.

In the drawing, 1 is a TV tuner, 2 is a VIF circuit, 3 is a control microcomputer used for channel selection, etc., 4 is a memory and 5 is a D/A control circuit. 6 is an AGC circuit. 7 is an instrument which is provided outside the TV receiver and equipped with a voltage comparison detection circuit 8 and a TV video signal processing circuit 9.

The above circuit operates as follows.

Negative feedback voltage is imposed from VIF circuit 2 to TV tuner 1 by means of AGC circuit 6 for gain control. When a gain error occurs between VIF circuit 2 and TV tuner 1, voltage comparison detection circuit 8 generates a determination signal which corresponds to a error determined by comparing an error voltage and a preset standard voltage and said determination signal is input to the control microcomputer 3. Said microcomputer 3 carries out an adjustment control program corresponding to the gain error, and sends an operation signal to D/A control circuit 5. D/A control circuit 5 operates receiving the output from the control microcomputer 3, and adjusts the gain error in VIF circuit 2. Subsequently, the adjusted data is saved in the memory 4.

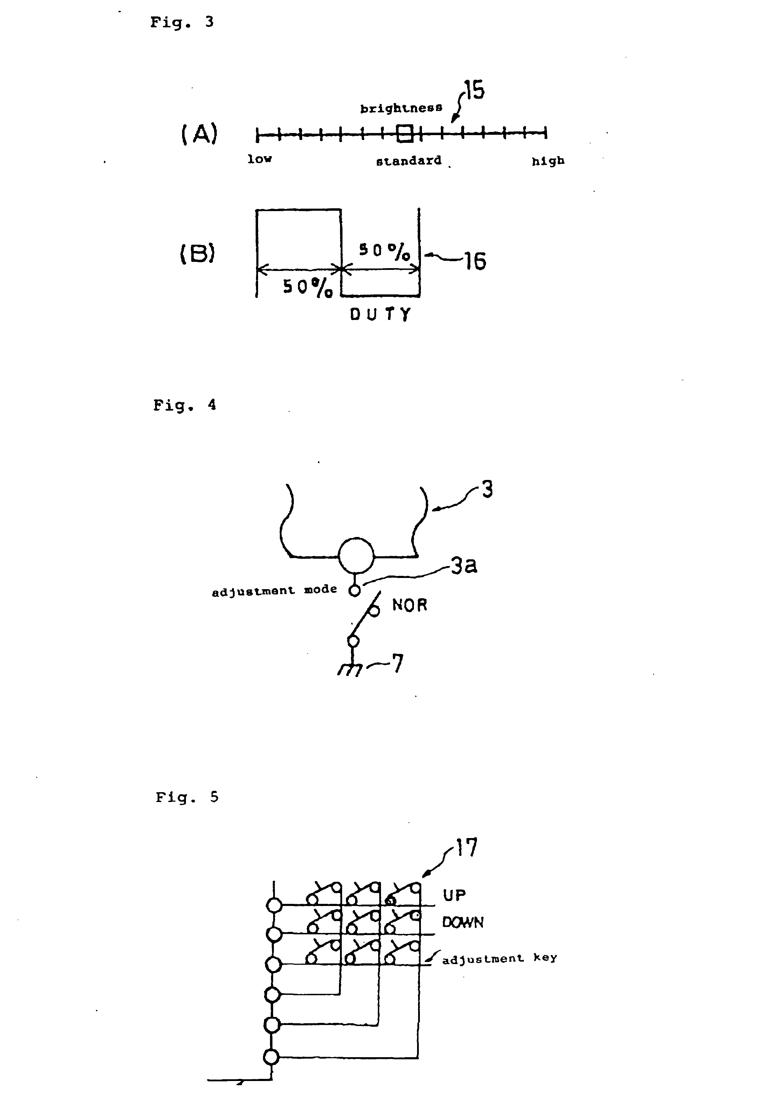

Said control microcomputer 3 may be also employed to adjust errors in other circuit. For example, as shown in Fig. 3, recent television receivers display a specific indicator on the CRT screen which indicates a standard or regular position of video brightness. Video signal processing circuit 9 and brightness/contrast control circuit 10 shall be set correctly, but there may occur variations or errors. Conventionally, adjustment was made mechanically by means of semifixed resistor as in the case of the VIF circuit. The automatic adjustment circuit in accordance with the present invention can be also applied to the video signal processing circuit 9 as shown in Fig. 2.

In the drawing, 9 is a video signal processing circuit, 10 is a brightness/contrast control circuit, 11 is a D/A control circuit, 12 is a instrument, and 13 is a detection circuit. 3 is a control microcomputer same as in the previous embodiment. Detection circuit 13 detects either error voltage from brightness/contrast control circuit 10 or the brightness or contrast level from the CRT screen via a light sensor, and it generates a determination signal after making comparison of the detection value with a standard value.

The determination signal is sent to the control microcomputer 3 so as to output an operation signal to D/A control circuit 11 for the adjustment of the error. As a result the brightness/contrast control circuit 10 is adjusted in response to the operation of D/A control circuit 11. D/A control circuit 11 is directly connected to brightness/contrast control circuit 10, but brightness and contrast may be also adjusted by connecting the D/A control circuit 11 directly to the video signal processing circuit 9, as shown by the phantom line in the drawing, so as to control the gain of video signal processing circuit 9.

Additional program mode of the microcomputer can be divided into two types. One is a TV operation mode which can be operated by a user, namely TV purchaser, himself, and another is an adjustment mode which is operated by a line operator, repairman, service man etc.

In the TV operation mode, the user may adjust brightness and contrast by operating the UP/DOWN button on the remote control unit while watching the TV screen displaying scale 15 as shown in Fig. 3 (A). In order to present the optimum video condition desired by the user when the point indicated on the scale is located in the center, a line operator adjusts the operation signal output which is applied from the control microcomputer 3 to the brightness/contrast circuit 10 so that the duty of the positive half cycle and that of the negative half cycle of the pulse modulation output waveform (PWM output) 16 of the operation signal output become identical. Then the user's operation of the UP/DOWN button on the remote control unit changes the positive/negative duty ratio of PWM output waveform 16 and consequently adjusts the brightness and contrast.

In the adjustment mode, on the other hand, as shown in Fig 2, adjustment is performed by inputting the operation signal output of the microcomputer 3 directly into the brightness/contrast circuit 10.

A line operator adjusts the operation signal output so that the optimum video condition can be obtained when the brightness indicator is positioned at the center of the scale, as in the case of the above TV operation mode. However, D/A control circuit 11 is not used, and then even if the positive/negative duty ratio of PWM output waveform of microcomputer 3 is adjusted to be identical, the optimal video condition desired may not always be obtained due to gain errors in either video signal processing circuit 9 or brightness/contrast circuit 10, depending on the TV unit. In this case, the desired optimal video condition is established by intentionally shifting the positive/negative duty ratio of the PWM output from microcomputer 3 to brightness/contrast circuit 10. In other words, adjustment is made by setting the PWM output of microcomputer 3 to, for example, a positive/negative duty ratio of 40% to 60%, depending on the degree of shift in brightness, without changing the center position of the scale shown in Fig. 3 (A). In a TV receiver thus adjusted, an excess or lack of brightness occurs at the maximum or minimum adjustment position far away from the center of the scale when the user changes the brightness using the remote control unit. But, no particular influence and trouble are experienced as far as said change is made within the range of regular adjustment.

The adjustment mode may be so arranged that the user can control it at his option. Further said mode may be also applied to adjust contrast, darkness of color and tint other than brightness.

Hereinafter, the detailed structure and operation of the automatic adjustment procedure are explained in accordance with the embodiments.

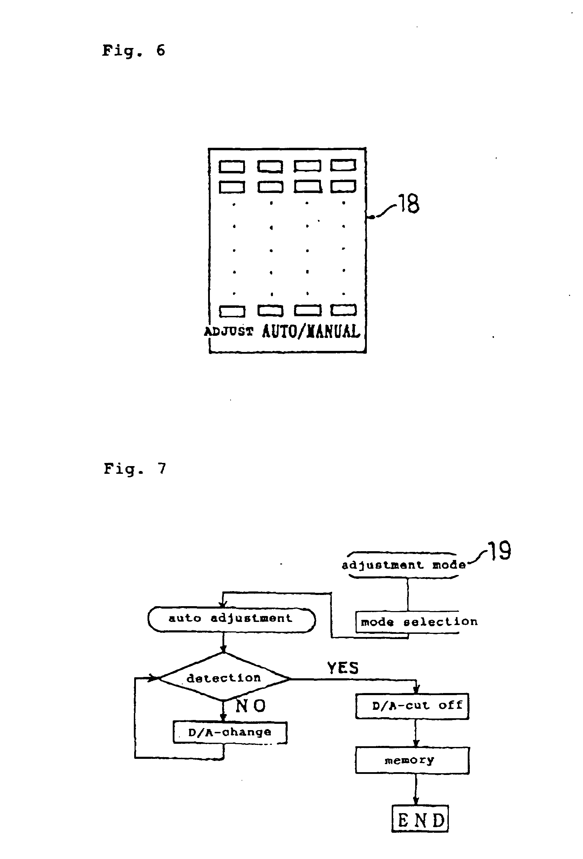

A mode changing switch of the microcomputer 3 which selects either the regular TV operation mode or adjustment mode is provided at an adjustment instrument 7 positioned outside the TV receiver and connected to a specific terminal 3a of the microcomputer 3 as shown in Fig. 4, or is provided in an additional fashion along with other key matrix switches 17 installed in the TV body as shown in Fig. 5. It may be also provided at a remote control unit 18 as shown in Fig. 6. And the adjustment mode is selected by operating said switch.

The automatic adjustment program procedure is as shown in Fig. 7. When the adjustment mode 19 is selected, input of errors into the microcomputer 3 is carried out through a detection circuit 8 or 13. Until the microcomputer 3 detects that the adjustment is completed, it continues to output the operation signal to a control circuit 5 or 11 to adjust the output of the control circuit.

When the adjustment is completed, the microcomputer 3 outputs an adjustment completion signal to a detection circuit 8 or 13, and stops the output of the operation signal to the control circuit 5 or 11. Then the adjustment data after the completion of adjustment is memorized and saved in a memory 4 or 14. Memories 4 and 14 are nonvolatile memories, so that the memorized adjustment data is saved even after the TV is forwarded.

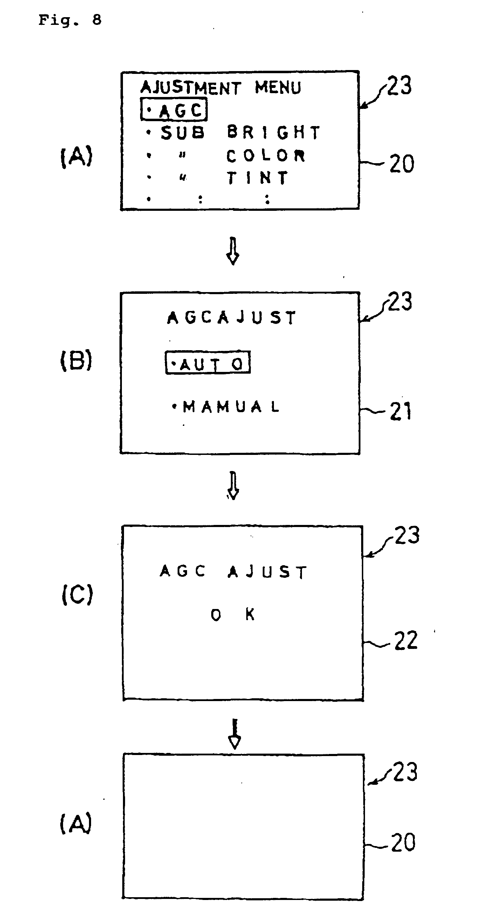

In order to make it easy for the person performing the adjustment, it is desirable to have the adjustment operation displayed on CRT 23 in the following order as shown in Figs. 8 (A), (B) and (C):
Adjustment menu 20 (Fig. 8 (A))--Selection of AUTO/MANUAL operation 21 (Fig. 8 (B))--Completion of adjustment 22 (Fig. 8 (C))--Adjustment mode 20.

Said display on CRT may be replaced by the indications using lamps.

In Fig. 8 (B) there is a display reading "MANUAL". This is a manual program mode function which is programmed into the microcomputer 3 in advance and is used to make readjustment after the product is delivered to the user. Automatic adjustment is so performed that the microcomputer's functions of detection and control are made automatically, but in the manual adjustment the automatic adjustment program functions of microcomputer 3 are discontinued and the adjustment may be performed manually. Mode selection switch may be prepared. During manual adjustment, adjustment is carried out by increasing or decreasing the output level of control circuits 5 or 11 using the remote control unit or the key operation on the TV unit. This option provides the benefit that readjustment and servicing may be easily performed anywhere.

Incidentally, this invention is not limited to the above embodiments. In particular, in the above embodiments, detection circuit 8 or 13 is provided at instrument 7 or 12 outside the apparatus and gain errors are input from outside the apparatus to control computer 3 inside the apparatus. However, this detection circuit 8 or 13 may also be mounted inside the apparatus so that the automatic adjustment can be made at the apparatus side. It is also possible to provide the circuit on both the instrument and inside the apparatus. Moreover, needless to say, while the above embodiments are directed for a TV receiver, the invention can be also applied to other types of electronic equipment which need similar adjustment.

## Claims

1. Electronic apparatus including: an analog control unit (10) having a gain adjustment to be pre-set to a standard value, a detection circuit (8, 13) connected to said analog control unit (10) to detect the departure, hereinafter referred to as the "gain error", of the gain adjustment of said analog control unit (10) from the said standard value, and to input a determination signal for the determination of the gain error detected to a control microcomputer (3) included in the apparatus, and a D/A control circuit (11) operated in response to receiving a signal from said control microcomputer (3) to adjust the gain adjustment of the analog control unit (10) to the standard value.

2. Electronic apparatus as claimed in claim 1, wherein the apparatus is a television receiver and said detection circuit (8, 13) is provided at an instrument (7, 12) provided outside the television receiver.

3. Electronic apparatus as claimed in claim 1 or claim 2, wherein the detection circuit (8) is a voltage comparison detection circuit arranged to generate a determination signal which corresponds to an error determined by comparing an error voltage and a preset standard voltage.

4. Electronic apparatus as claimed in any preceding claim, wherein the analog control unit (10) is a brightness/contrast control circuit (10).

5. Electronic apparatus as claimed in claim 4, including means for adjusting the duty cycle of a PWM output of a signal output from the control microcomputer to the brightness/contrast control circuit (10).

6. Electronic apparatus as claimed in any preceding claim, wherein the apparatus includes a CRT display.

## Patentansprüche

1. Elektronische Vorrichtung, umfassend: eine analoge Regeleinheit (10) mit einer zuvor auf einen Standardwert einzustellenden Verstärkungsnachregelung, eine mit der analogen Regeleinheit (10) verbundene Detektionsschaltung (8, 13), um die im folgenden als "Verstärkungsfehler" bezeichnete Abweichung der Verstärkungsnachregelung der analogen Regeleinheit (10) von dem besagten Standardwert zu detektieren und um ein Ermittlungssignal für die Ermittlung des detektierten Verstärkungsfehlers einem in der Vorrichtung eingeschlossen Steuermikrocomputer (3) einzugeben, und eine D/A-Regelschaltung (11), die ansprechend auf den Empfang eines Signals von dem Steuermikrocomputer (3) betrieben wird, um die Verstärkungsnachregelung der analogen Regeleinheit (10) auf den Standardwert nachzuregeln.

2. Elektronische Vorrichtung nach Anspruch 1, bei der die Vorrichtung ein Fernsehempfänger ist und die Detektionsschaltung (8, 13) an einem Gerät (7, 12) vorgesehen ist, das außerhalb des Fernsehempfängers vorgesehen ist.

3. Elektronische Vorrichtung nach Anspruch 1 oder Anspruch 2, bei der die Detektionsschaltung (8) eine Spannungsvergleichsdetektionsschaltung ist, die angeordnet ist, um ein Ermittlungssignal zu erzeugen, das einem Fehler entspricht, der ermittelt wird, indem man eine Fehlerspannung und eine voreingestellte Standardspannung vergleicht.

4. Elektronische Vorrichtung nach einem vorangehenden Anspruch, bei der die analoge Regeleinheit (10) eine Helligkeit/Kontrast-Regelschaltung (10) ist.

5. Elektronische Vorrichtung nach Anspruch 4, umfassend eine Einrichtung zum Nachregeln des Taktzyklus einer PWM-Ausgangsgröße eines Signalausgangs vom Steuermikrocomputer zur Helligkeit/Kontrast-Regelschaltung (10).

6. Elektronische Vorrichtung nach einem vorangehenden Anspruch, bei der die Vorrichtung einen CRT-Bildschirm umfaßt.

## Revendications

1. Dispositif électronique comprenant : une unité de commande analogique (10) comportant un ajustement de gain devant être préétabli à une valeur standard, un circuit de détection (8, 13) relié à ladite unité de commande analogique (10) pour détecter l'écart, appelé ci -après l' "erreur de gain", de l'ajustement de gain de ladite unité de commande analogique (10) par rapport à ladite valeur standard, et pour appliquer en entrée un signal de détermination, en vue de la détermination de l'erreur de gain détectée, à un microcalculateur de commande (3) compris dans le dispositif, et un circuit de commande numérique/analogique (11) mis en oeuvre en réponse à la réception d'un signal provenant dudit microcalculateur de commande (3) pour ajuster l'ajustement de gain de l'unité de commande analogique (10) à la valeur standard.

2. Dispositif électronique selon la revendication 1, dans lequel le dispositif est un récepteur de télévision et ledit circuit de détection (8, 13) est prévu au niveau d'un instrument (7, 12) disposé à l'extérieur du récepteur de télévision.

3. Dispositif électronique selon la revendication 1 ou la revendication 2, dans lequel le circuit de détection (8) est un circuit de détection de comparaison de tension agencé pour générer un signal de détermination qui correspond à une erreur déterminée en comparant une tension d'erreur et une tension standard préétablie.

4. Dispositif électronique selon l'une quelconque des revendications précédentes, dans lequel l'unité de commande analogique (10) est un circuit de commande de luminosité /contraste (10).

5. Dispositif électronique selon la revendication 4, comprenant un moyen destiné à ajuster le rapport cyclique d'une sortie à modulation de largeur d'impulsion (PWM) d'un signal fourni en sortie à partir du microcalculateur de commande vers le circuit de commande de luminosité /contraste (10).

6. Dispositif électronique selon l'une quelconque des revendications précédentes, dans lequel le dispositif comprend un afficheur à écran cathodique.
